(19) Europäisches Patentamt
European Patent Office
Office européen des brevets

(11) **EP 2 417 476 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(21) Anmeldenummer: **10704149.3**

(22) Anmeldetag: **17.02.2010**

(51) Int Cl.:
*G01S 7/35* (2006.01)    *G01S 13/34* (2006.01)
*G01S 13/42* (2006.01)    *G01S 13/58* (2006.01)
*G01S 13/66* (2006.01)    *G01S 13/93* (2006.01)

(86) Internationale Anmeldenummer:
**PCT/EP2010/051951**

(87) Internationale Veröffentlichungsnummer:
**WO 2010/115651 (14.10.2010 Gazette 2010/41)**

(54) **FMCW-RADARSENSOR UND VERFAHREN ZUM FREQUENZMATCHING**

FMCW RADAR SENSOR AND METHOD FOR FREQUENCY MATCHING

DÉTECTEUR RADAR À ONDE ENTRETENUE MODULÉE EN FRÉQUENCE, ET PROCÉDÉ D'ACCORD DE FRÉQUENCES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.04.2009 DE 102009002243**

(43) Veröffentlichungstag der Anmeldung:
**15.02.2012 Patentblatt 2012/07**

(73) Patentinhaber: **Robert Bosch GmbH**
**70442 Stuttgart (DE)**

(72) Erfinder:
• **GROSS, Volker**
**71254 Ditzingen (DE)**
• **STEFFENS, Wolf**
**71083 Herrenberg (DE)**
• **LEINBAUM, Stephan**
**74189 Weinsberg (DE)**
• **KUEHNLE, Goetz**
**71282 Hemmingen (DE)**
• **TREPTOW, Andre**
**72119 Ammerbuch (DE)**

(56) Entgegenhaltungen:
**DE-A1- 10 243 811    DE-A1-102006 028 465**
**DE-A1-102007 043 535**

**Beschreibung**

Stand der Technik

Die Erfindung betrifft ein Verfahren zum Frequenzmatching bei einem FMCW-Radarsensor, bei dem mehrere Frequenzen, die auf verschiedenen Modulationsrampen gewonnen werden und jeweils ein vom Radarsensor geortetes Objekt repräsentieren, in einem d-v-Raum als geometrische Orte dargestellt werden, die mögliche Kombinationen aus Abstand d und Geschwindigkeit v des betreffenden Objekts repräsentieren, und, um die auf den verschiedenen Modulationsrampen georteten Objekte zu identifizieren, Koinzidenzen zwischen den geometrischen Orten gesucht werden, die zu auf verschiedenen Modulationsrampen gewonnenen Frequenzen gehören.

Ein Verfahren dieser Art ist aus DE 10 2006 028465 A1 bekannt.

Weiterhin betrifft die Erfindung einen FMCW-Radarsensor, in dem diese Verfahren implementiert ist und der beispielsweise in Fahrerassistenzsystemen für Kraftfahrzeuge eingesetzt werden kann.

Das Funktionsprinzip eines FMCW-Radarsensors (Frequency Modulated Countinuous Wave) besteht darin, daß die Frequenz des gesendeten Radarsignals rampenförmig moduliert wird und das von einem Objekt reflektierte und wieder vom Sensor empfangene Signal mit einem Teil des zum Empfangszeitpunkt gesendeten Signals gemischt wird. Das Mischprodukt enthält dann eine Zwischenfrequenzkomponente, deren Frequenz der Differenz zwischen dem gesendeten und dem empfangenen Signal entspricht. Diese Differenz ist einerseits aufgrund der während der Signallaufzeit eingetretenen Änderung der Sendefrequenz vom Objektabstand abhängig, ist jedoch andererseits aufgrund des Dopplereffektes auch von der Relativgeschwindigkeit des Objekts abhängig.

Das Zwischenfrequenzsignal wird durch schnelle Fouriertransformation in sein Frequenzspektrum zerlegt, und jedes geortete Objekt wird in diesem Spektrum durch einen Peak bei einer Frequenz repräsentiert, die vom Abstand und der Geschwindigkeit (Relativgeschwindigkeit) des Objekts abhängig ist. Anhand dieser einzelnen Frequenz lassen sich jedoch der tatsächliche Abstand und die tatsächliche Geschwindigkeit des Objekts noch nicht eindeutig bestimmen. Dazu ist es vielmehr erforderlich, dasselbe Objekt auf mindestens zwei Modulationsrampen des gesendeten Signals zu orten, wobei diese beiden Modulationsrampen unterschiedliche Steigungen haben müssen.

Jede der beiden Frequenzen repräsentiert dann eine Vielzahl möglicher Kombinationen von Abstand d und Relativgeschwindigkeit v des Objekts. In einem d-v-Raum, in dem die Geschwindigkeit des Objekts gegen dessen Abstand aufgetragen wird, ist der geometrische Ort der möglichen Kombinationen aus Abstand und Geschwindigkeit für eine gegebene Frequenz eine Gerade, deren Steigung von der Steigung der Modulationsrampe abhängig ist. Für zwei Rampen erhält man so zwei Geraden mit unterschiedlicher Steigung, und deren Schnittpunkt, also der Punkt, an dem Koinzidenz zwischen den zu den beiden Frequenzen gehörenden geometrischen Orten besteht, gibt den wahren Abstand und die wahre Geschwindigkeit des Objekts an.

Wenn sich mehrere Objekte gleichzeitig im Ortungsbereich des Radarsensors befinden, besteht jedoch das Problem, daß sich auch bei Auswertung von zwei Modulationsrampen nicht mehr eindeutig bestimmen läßt, welcher Peak zu welchem Objekt gehört. Für eine Situation mit zwei Objekten erhält man beispielsweise im d-v-Raum zwei Paare paralleler Geraden, die vier Schnittpunkte miteinander bilden, doch können nur zwei dieser Schnittpunkte realen Objekten entsprechen, während die anderen Schnittpunkte sogenannte Scheinobjekte repräsentieren.

Um zu eindeutigen Ergebnissen zu gelangen, ist wenigstens eine dritte Modulationsrampe erforderlich. Reale Objekte lassen sich daran erkennen, daß im d-v-Raum Koinzidenz zwischen allen drei geometrischen Orten besteht, die zu den auf den drei verschiedenen Frequenzrampen erhaltenen Frequenzen gehören. Anschaulich bedeutet dies, daß sich alle drei Geraden, die den drei Frequenzen entsprechen, im Rahmen der Genauigkeitsgrenzen in einem Punkt schneiden. Diese Koinzidenzprüfung wird als Frequenzmatching bezeichnet.

Da sich jedoch die Frequenzen der Peaks nur mit begrenzter Genauigkeit bestimmen lassen, kann man auch für ein reales Objekt nicht erwarten, daß sich die drei Geraden, die zu den drei Modulationsrampen gehören, exakt in einem Punkt schneiden. Vielmehr wird man drei verschiedene Schnittpunkte erhalten, die allerdings relativ nahe beieinanderliegen. Damit man überhaupt ein Objekt identifizieren kann, muß deshalb eine gewisse Toleranz zugelassen werden. Wenn jedoch eine größere Anzahl von Objekten geortet wird, kann diese Toleranz wiederum dazu führen, daß scheinbare Koinzidenzen, sogenannte Fehlmatches, auftreten, zu denen keine realen Objekte gehören.

In der Praxis wird häufig mit vier verschiedenen Modulationsrampen gearbeitet, und das Kriterium für ein reales Objekt besteht dann darin, daß sich alle vier Geraden im Rahmen der Toleranzgrenzen in einem Punkt schneiden. Auch dann könnten Fehlmatches auftreten, insbesondere dann, wenn die Anzahl der Objekte und damit die Dichte der Peaks in den Spektren relativ hoch ist. Die Fehlmatchrate ist proportional zur Größe des betrachteten Ausschnitts des d-v-Raumes nimmt jedoch mit zunehmender Objektdichte und zunehmender Varianz der Peakfrequenzen überproportional zu.

Außerdem steigt mit zunehmender Objektanzahl und zunehmender Anzahl der Modulationsrampen auch die benötigte Rechenzeit. Da mindestens die auf zwei Rampen erhaltenen Frequenzen paarweise miteinander kombiniert werden müssen, nimmt die Rechenzeit mindestens quadratisch mit der Anzahl der Objekte zu. Eine solche Zunahme der Rechenzeit ist jedoch bei vielen Anwendungen problematisch. Dies gilt beispielsweise bei dem Einsatz eines FMCW-Radars in einem Abstandsregelsystem für Kraftfahrzeuge. In dem Fall müssen die Abstände und Relativgeschwindigkeiten aller vorausfahrenden Fahrzeuge in so kurzen Zeitintervallen aktualisiert werden können, daß sich das Verkehrsgeschehen mit hinreichender Genauigkeit verfolgen läßt und eine situationsgerechte Abstandsregelung ermöglicht wird.

In DE 102 43 811 A1 wird ein Verfahren zum Frequenzmatching bei einem FMCW-Radar für Kraftfahrzeuge beschrieben, bei dem die zeitliche Entwicklung der Abstände und Relativgeschwindigkeiten der georteten Objekte über mehrere Meßzyklen des Radarsensors hinweg verfolgt wird und Fehlmatches im aktuellen Meßzyklus anhand unplausibler "Sprünge" in den dynamische Größen des vermeintlichen Objekts erkannt werden. Auch dieses Verfahren erfordert jedoch einen hohen Rechenaufwand.

DE 10 2007 043535A1 offenbart ein FMCW-Radar mit unstetiger Frequenzmodulation.

Offenbarung der Erfindung

Aufgabe der Erfindung ist es, ein Verfahren zum Frequenzmatching anzugeben, das wenig Rechenaufwand erfordert und dabei eine niedrige Fehlmatchrate aufweist.

Diese Aufgabe wird erfindungsgemäß dadurch gelöst, daß in einem ersten Schritt die Suche nach Koinzidenzen auf einen Teilraum des d-v-Raumes beschränkt wird und in einem nachfolgenden Schritt die Suche auf andere Bereiche des d-v-Raumes ausgedehnt wird, jedoch mit Unterdrückung der Frequenzen, die zu den im ersten Schritt gefundenen Objekten gehören.

Vorteile der Erfindung

Eine genauere Analyse der Abhängigkeit der Fehlmatchrate von den Parametern der Frequenzmatching-Prozedur zeigt, daß die Fehlmatchrate sinkt, wenn die Suche nach Koinzidenzen auf ein kleineres Gebiet innerhalb des d-v-Raumes beschränkt wird. Auch bei hoher Objektdichte werden dann die meisten Scheinkoinzidenzen außerhalb des betrachteten Gebietes liegen. Nachdem nun innerhalb dieses eingeschränkten Gebietes die Objekte identifiziert worden sind, werden die zugehörigen Frequenzen und die ihnen entsprechenden Geraden im d-v-Raum gewissermaßen ausgeblendet, und es wird nur noch nach Schnittpunkten zwischen den verbleibenden Geraden gesucht. Da somit in dem nachfolgenden Schritt die Objektdichte geringer ist, nimmt bei der weiteren Suche nach Koinzidenzen die Fehlmatchrate deutlich ab.

Durch die anfängliche Beschränkung des untersuchten Gebietes im d-v- Raum wird zugleich die Anzahl der zu untersuchenden Kombinationen von Frequenzen und damit die nötige Rechenzeit erheblich reduziert.

Vorteilhafte Ausgestaltungen und Weiterbildungen der Erfindung sind in den Unteransprüchen angegeben.

In einer vorteilhaften Ausführungsform, insbesondere für den Einsatz des Radarsensors in Fahrerassistenzsystemen von Kraftfahrzeugen, wird die Suche nach Koinzidenzen im ersten Schritt auf einen Teilraum des d-v-Raumes beschränkt, der für die betreffende Assistenzfunktion eine besonders hohe Relevanz und/oder Plausibilität hat. Wenn z. B. die vom Radarsensor unterstützte Assistenzfunktion eine Abstandsregelfunktion ist, kann man sich zunächst auf den Bereich des d-v-Raumes beschränken, in dem ein unmittelbarer Regeleingriff erforderlich wäre, um den Sollabstand zum unmittelbar vorausfahrenden Fahrzeug einzuhalten.

Eine andere Möglichkeit zur sinnvollen Beschränkung des d-v-Raumes besteht darin, daß man sich zunächst auf einen oder mehrere Teilräume beschränkt, in denen aufgrund der in der Vergangenheit gewonnenen Ergebnisse mit hoher Wahrscheinlichkeit ein Objekt zu erwarten ist. Beispielsweise wird in einem Fahrerassistenzsystem für Kraftfahrzeuge typischerweise die zeitliche Entwicklung der Abstände und Relativgeschwindigkeiten der georteten Objekte über einen längeren Zeitraum hinweg verfolgt, und im Rahmen einer Tracking-Prozedur wird anhand der in der Vergangenheit gewonnen Ergebnisse vorhergesagt, bei welchem Abstand und welcher Relativgeschwindigkeit sich das verfolgte Objekt voraussichtlich im nächsten Meßzyklus befinden wird. Es ist daher zweckmäßig, die Suche nach Koinzidenzen zunächst auf verhältnismäßig kleine Zellen im d-v-Raum zu beschränken, die in der Umgebung derjenigen Punkte liegen, für die aufgrund der Tracking-Prozedur die Existenz eines Objekts vorausgesagt wird.

Eine andere Möglichkeit besteht bei Kraftfahrzeuganwendungen darin, daß man sich zunächst auf die Suche nach stehenden Objekten beschränkt, also die Suche nach Objekten, deren Relativgeschwindigkeit dem Betrage gleich der Fahrgeschwindigkeit des eigenen Fahrzeugs ist. Der betreffende Teilraum des d-v-Raumes ist dann ein schmaler Schlauch um diese Relativgeschwindigkeit herum.

Vorteilhaft ist es auch, wenn der betrachtete Teil des d-v-Raumes in mehreren Schritten sukzessive eingeschränkt wird. Jeder Schritt kann dabei in Teilschritte unterteilt sein, in denen unterschiedlich strenge Kriterien für das Frequenzmatching gelten, sei es hinsichtlich der Genauigkeit der Koinzidenz oder hinsichtlich der Anzahl der Frequenzen, für welche Koinzidenz verlangt wird. Wenn z. B. mit vier unterschiedlichen Rampensteigungen gearbeitet wird und man somit im d-v-Raum im Prinzip für jedes Objekt vier Geraden erhält, kann man zunächst nach Koinzidenzen suchen, bei denen sich alle vier Geraden in einem Punkt schneiden, und dann nach Koinzidenzen suchen, bei denen sich nur drei Geraden in einem Punkt schneiden.

In einer vorteilhaften Ausführungsform wird in einem letzten Schritt des Verfahrens ein "Restmatching" durchgeführt, bei dem einige der vorher ausgeblendeten Frequenzen, beispielsweise solche, deren Peaks eine besonders hohe Leistung hatten, wieder eingeblendet werden. Auf diese Weise lassen sich auch Objekte identifizieren, die in den vorangegangenen Schritten aufgrund von Frequenzüberlagerungen verborgen geblieben sind.

Kurze Beschreibung der Zeichnungen

Ein Ausführungsbeispiel der Erfindung ist in den Zeichnungen dargestellt und in der nachfolgenden Beschreibung näher erläutert.
Es zeigen:

Fig. 1        ein Blockdiagramm eines FMCW-Radarsensors;

Fig. 2        ein Diagramm eines d-v-Raumes für ein einzelnes Objekt, das auf vier verschiedenen Modulationsrampen geortet wurde;

Fig. 3        ein Diagramm eines d-v-Raumes mit einer Vielzahl von georteten Objekten;

Fig. 4        ein Diagramm zur Erläuterung einer Beschränkung des d-v-Raumes auf einen Teilraum;

Fig. 5        ein Diagramm eines d-v-Raumes für einen ersten Schritt des erfindungsgemäßen Verfahrens;

Fig. 6        eine Ausschnittsvergrößerung zu Fig. 5; und

Fig. 7 - 10    Diagramme des d-v-Raumes nach Fig. 5 für nachfolgende Schritte des erfindungsgemäßen Verfahrens.

Ausführungsformen der Erfindung

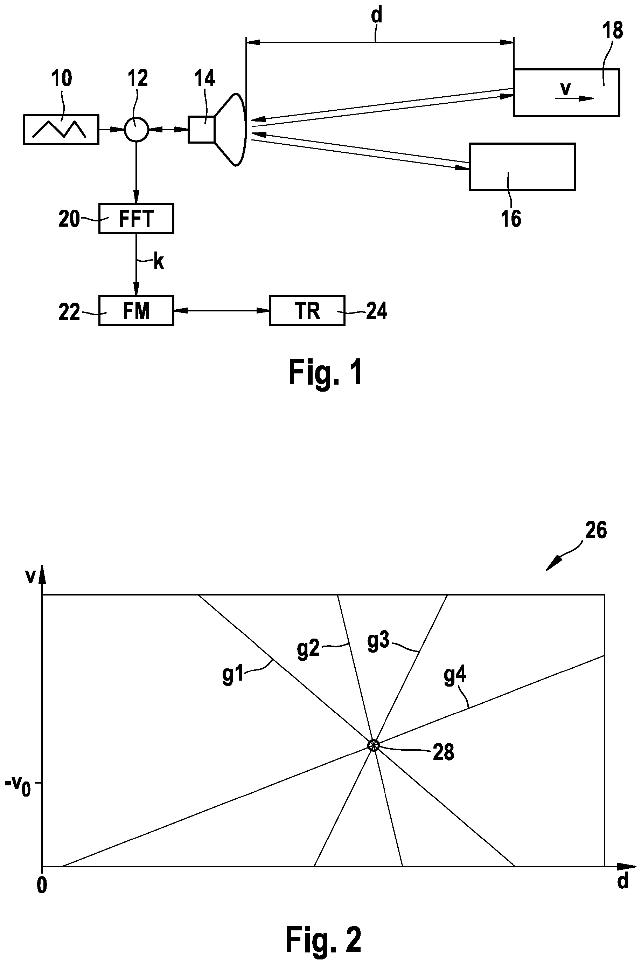

Fig. 1 ist ein Blockdiagramm eines FMCW-Radarsensors, wie er beispielsweise im Rahmen eines Fahrerassistenzsystems für Kraftfahrzeuge eingesetzt wird, etwa zur Ortung von vorausfahrenden Fahrzeugen mit dem Ziel, den Abstand zu dem unmittelbar vorausfahrenden Fahrzeug zu regeln.
Der Radarsensor weist einen Treiber 10 auf, der ein Radarsignal mit einer rampenförmig modulierten Frequenz über einen Mischer 12 an eine Sende- und Empfangseinheit 14 liefert. Wie in Fig. 1 symbolisch in dem Block dargestellt ist, der den Träger 10 repräsentiert, besteht die rampenförmige Frequenzmodulation hier in einer Abfolge von vier Frequenzrampen mit unterschiedlicher Steigung, wobei die erste und die zweite Rampe und die dritte und die vierte Rampe jeweils entgegengesetzt gleiche Steigungen haben. Dieses Modulationsmuster wiederholt sich dann in jedem Meßzyklus des Radarsensors.
Die von der Sende- und Empfangseinheit 14 emittierte Radarstrahlung wird im gezeigten Beispiel an zwei Objekten 16, 18 reflektiert, bei denen es sich beispielsweise um vorausfahrende Fahrzeuge handeln kann. Das reflektierte Signal wird wieder von der Sende- und Empfangseinheit 14 empfangen und im Mischer 12 mit dem in diesem Zeitpunkt aktuell vom Treiber 10 zugeführten Signal gemischt. Das Mischprodukt ist ein Zwischenfrequenzsignal, dessen Frequenz vom Frequenzunterschied zwischen dem gesendeten Signal und dem empfangenen Signal abhängig ist. Dieser Frequenzunterschied ist seinerseits sowohl vom Abstand d des Objekts wie auch von dessen Geschwindigkeit v (Relativgeschwindigkeit) abhängig.
In einer Transformationsstufe 20 wird das Zwischenfrequenzsignal für jede Modulationsrampe durch schnelle Fouriertransformation (FFT) in sein Spektrum zerlegt. Die Frequenzspektren, die man auf diese Weise für die vier aufeinanderfolgenden Modulationsrampen erhält, weisen im Idealfall für jedes Objekt einen Peak bei einer Frequenz k auf, die durch den Abstand und die Geschwindigkeit des Objekt und die Steigung der Modulationsrampe bestimmt ist. Die Frequenzen k werden in einem Frequenzmatching-Modul 22 weiter analysiert, um die einzelnen Objekte zu identifizieren und deren Abstände und Geschwindigkeiten zu bestimmen. Das dazu benutzte Verfahren wird weiter unten noch näher erläutert werden.
Die Ergebnisse des Frequenzmatching, also insbesondere die Abstände und Geschwindigkeiten aller georteten Objekte, werden einem Trackingmodul 24 (TR) zugeführt, der die Historie der dynamischen Daten (Abstände und Geschwindigkeiten und bei einem winkelauflösenden Radar auch die Richtungswinkel) der georteten Objekte aufzeichnet und so die zeitliche Entwicklung der Objekte verfolgt und in die Zukunft projiziert. Diese Prozedur, die als Tracking-Prozedur bezeichnet wird, liefert somit für jedes Objekt Vorhersagewerte für den im nächsten Meßzyklus zu erwartenden Abstand und die zu erwartende Geschwindigkeit. Diese Vorhersagewerte werden im Frequenzmatching-Modul 22 dazu genutzt, die benötigte Rechenzeit für die Frequenzmatching-Prozedur zu verkürzen und die Häufigkeit von Fehlmatches zu verringern.

Fig. 2 zeigt ein Diagramm eines d-v-Raumes, in dem auf der Abszisse der Abstand d und auf der Ordinate die Geschwindigkeit v angegeben ist. Die Geschwindigkeit v ist hier die Relativgeschwindigkeit des Objekts 16 bzw. 18 relativ zur Eigengeschwindigkeit $v_0$ des Fahrzeugs, das mit dem Radarsensor ausgerüstet ist. Eine positive Geschwindigkeit v bedeutet somit, daß sich das Objekt vom eigenen Fahrzeug entfernt, und eine negative Geschwindigkeit v bedeutet, daß das eigene Fahrzeug zu dem Objekt aufschließt. Für stehende Objekte, also Objekte, deren Absolutgeschwindigkeit null ist, gilt $v = -v_0$.

Ein einzelnes Objekt wird in dem d-v-Raum 26 durch einen Punkt 28 repräsentiert, dessen Abszisse den Abstand d dieses Objekts und dessen Ordinate die Geschwindigkeit v dieses Objekts angibt.

Wenn ein einzelnes Objekt vom Radarsensor geortet wird, so gilt für die Frequenz k des entsprechenden Peaks im Spektrum die Beziehung:

$$k = \alpha * d + \beta * v \qquad\qquad (1)$$

In dieser Gleichung ist $\alpha$ eine Konstante, die von der Steigung der Modulationsrampe abhängig ist. Die Konstante $\beta$ ist proportional zur Frequenz des Radarsignals und bestimmt die Geschwindigkeitsabhängigkeit der Frequenz k aufgrund des Dopplereffekts.

Nach Umstellung erhält man:

$$v = -(\alpha/\beta) * d + (k/\beta) \qquad\qquad (2)$$

Die Gleichung (2) ist die Gleichung einer Geraden im d-v-Raum. Diese Gerade ist der geometrische Ort aller Kombinationen aus Abstand d und Geschwindigkeit v, die das Objekt haben kann, das den Peak bei der Frequenz k erzeugt hat.

In Fig. 2 sind vier solcher Geraden g1 - g4 gezeigt, je eine für jede Modulationsrampe. Da die Konstante $\alpha$ von der Rampensteigung abhängig ist, unterscheiden sich auch diese vier Geraden in ihrer Steigung. Im Idealfall, ohne Berücksichtigung des Einflusses von Meßfehlern, sollten sich alle vier Geraden g1 - g4 genau in einem Punkt 28 schneiden, wie in Fig. 2 gezeigt ist.

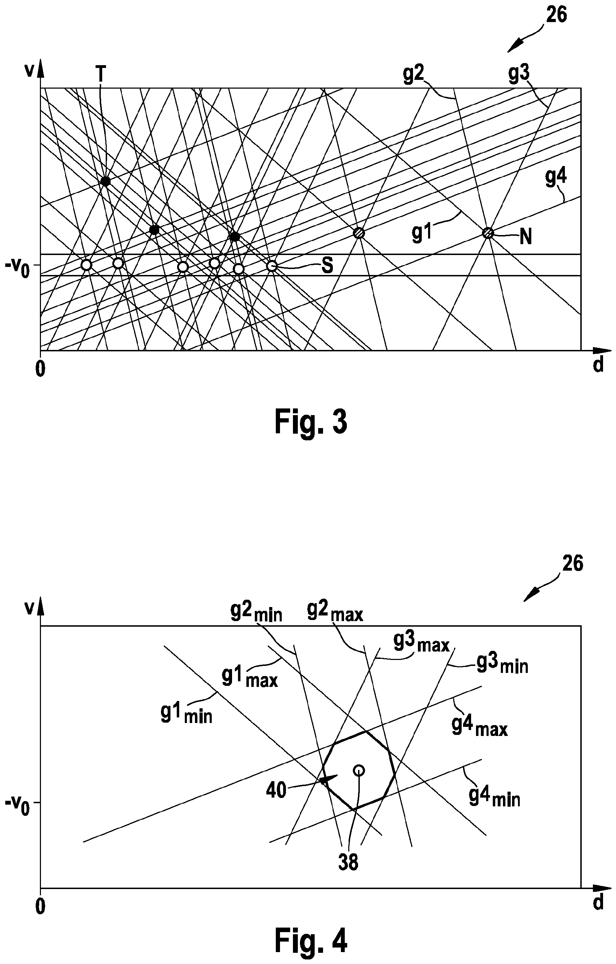

Fig. 3 zeigt den d-v-Raum 26 für den Fall, daß elf Objekte gleichzeitig geortet werden. Entsprechend enthält das Diagramm elf Punkte T, S und N, die jeweils im Schnittpunkt von vier Geraden g1 - g4 liegen und hier als "Koinzidenzen" bezeichnet werden. Da man für jedes Objekt vier solcher Geraden g1 - g4 erhält, ergibt sich eine verwirrende Vielfalt von $11^2 = 121$ Geradenschnittpunkten, von denen allerdings einige außerhalb des betrachteten Ausschnitts des d-v-Raumes liegen können. Nur elf dieser Schnittpunkte entsprechen realen Objekten.

Die realen Objekte sollten sich theoretisch dadurch auszeichnen, daß sich alle vier Geraden g1 - g4 exakt in demselben Punkt schneiden. Aufgrund statischer Meßfehler ist dies in der Praxis jedoch nur näherungsweise der Fall. Wegen dieser Ungenauigkeit ist es oft nicht einfach zu entscheiden, ob sich vier gegebene Geraden in diesem Sinne in einem Punkt schneiden oder nicht. Solche Zweifelsfälle kommen um so häufiger vor, je größer die Anzahl der Objekte ist und je dichter dementsprechend die Geraden im d-v-Raum liegen.

Erschwerend kommt hinzu, daß in einigen Fällen zwei Peaks auch so nahe beieinander liegen können, daß sie sich nicht mehr in zwei getrennte Peaks auflösen lassen und folglich im d-v-Raum nur durch eine einzige Gerade repräsentiert werden. Wie weiter unten näher erläutert werden wird, kann es deshalb auch vorkommen, daß reale Objekte durch einen Punkt repräsentiert werden, in dem sich nur drei Geraden schneiden.

Wenn sich genau drei Geraden schneiden, spricht man von einer Dreifach-Koinzidenz, wenn sich alle vier Geraden scheiden, von einer Vierfach-Koinzidenz.

Im Frequenzmatching-Modul 22 ist der Verlauf sämtlicher Geraden im d-v-Raum in elektronischer Form repräsentiert. Beispielsweise kann jede Gerade durch ihre Geradengleichung (2) repräsentiert werden, wobei für k jeweils die gemessene Frequenz k (Scheitelfrequenz) einzusetzen ist. Um die Koinzidenzen zu erkennen und die entsprechenden Objekte zu identifizieren, müßte nun im Prinzip für jedes Paar nichtparalleler Geraden rechnerisch geprüft werden, ob wenigstens eine weitere Gerade durch ihren Schnittpunkt verläuft.

Im folgenden wird ein Verfahren beschrieben, das es erlaubt, den Rechenaufwand für die Suche nach Koinzidenzen zu verringern und gleichzeitig die Häufigkeit von "Fehlmatches" zu verringern, die dadurch entstehen, daß Fälle, in denen sich zufällig drei oder vier Geraden in annähernd demselben Punkt schneiden, fälschlich als Koinzidenzen interpretiert werden, obwohl in Wahrheit kein Objekt mit den durch diesen Punkt angegebenen Werten von Abstand und Geschwindigkeit existiert.

Dazu soll zunächst angenommen werden, daß das Tracking-Modul 24 aufgrund der in vorangegangenen Meßzyklen erhaltenen Ergebnisse bereits Vorhersagewerte für die Abstände und Geschwindigkeiten der bisher georteten und verfolgten Objekte liefert.

In Fig. 4 wird ein solcher vom Tracking-Modul gelieferter Vorhersagewert für ein einzelnes Objekt durch einen Punkt 38 im d-v-Diagramm repräsentiert. Auch diese Vorhersage ist naturgemäß mit einer gewissen Ungenauigkeit behaftet, da nicht genau bekannt ist, in welcher Weise sich die Geschwindigkeit des betreffenden Objekts seit dem letzten Meßzyklus verändert hat. Es ist aber zu erwarten, daß das Objekt zumindest in der Nähe des Punktes 38 zu finden sein wird.

In einem ersten Schritt der Frequenzmatching-Prozedur wird deshalb der betrachtete Teil des d-v-Raumes auf einen Teilraum 40 beschränkt, der den Punkt 38 enthält und dessen Abmessungen der geschätzten Ungenauigkeit des Vorhersagewertes entsprechen. Das Tracking-Modul 24 ist in der Lage, auch Schätzwerte für diese Ungenauigkeit in den Koordinaten d und v zu liefern. Im gezeigten Beispiel hat der Teilraum 40 die Form eines achteckigen Polygons. Er kann jedoch wahlweise auch die Form eines Rechtecks, einer Ellipse oder dgl. haben.

Wenn sich im aktuellen Meßzyklus das verfolgte Objekt wie erwartet in dem Teilraum 40 befindet, so müßten die vier zugehörigen Geraden g1 - g4 (oder im Fall einer Peaküberlagerung mindestens drei dieser Geraden) durch den Teilraum 40 hindurchgehen. Für die Frequenzen k in den Geradengleichungen dieser Geraden läßt sich dann jeweils ein Maximalwert und ein Minimalwert angeben. Bei bekannter Form und Lage des Teilraumes 40 ergeben sich diese Maximal- und Minimalwerte aus dieser Bedingung, daß die zugehörige Gerade den Rand des Teilraums noch an mindestens einem Punkt berührt.

Wenn man nun für eine gegebene Modulationsrampe für k einmal den Maximalwert und einmal den Minimalwert einsetzt, erhält man zwei parallele Geraden, die den Teilraum 40 zwischen sich einschließen und dessen Rand berühren. In Fig. 4 sind diese Geraden für alle vier Modulationsrampen mit $g1_{min}$, $g1_{max}$, $g2_{min}$, $g2_{max}$, $g3_{min}$, $g3_{max}$, $g4_{min}$ und $g4_{max}$ bezeichnet.

Um das Objekt innerhalb des Teilraumes 40 zu finden, kann man nun beispielsweise so vorgehen, das man zunächst im Spektrum für die erste Modulationsrampe einen Peak sucht, dessen Frequenz k zwischen dem Minimalwert und dem Maximalwert liegt. Dann sucht man entsprechend in dem Spektrum für die zweite Modulationsrampe einen Peak, dessen Frequenz k zwischen dem Minimalwert und dem Maximalwert für diese Rampe liegt, und man prüft, ob sich die beiden Geraden innerhalb des Teilraumes 40 schneiden. Dann prüft man, ob sich in den Spektren für die beiden verbliebenen Modulationsrampen jeweils ein Peak findet, dessen zugehörige Gerade durch denselben Schnittpunkt geht. Dabei kann man die Suche jeweils auf das Frequenzintervall zwischen dem Minimalwert und dem Maximalwert für die Frequenz k beschränken, wodurch der Rechenaufwand erheblich reduziert wird.

In dem in Fig. 4 gezeigten Beispiel ist die Form des Teilraumes 40 der Einfachheit halber so gewählt worden, daß dieser Teilraum unmittelbar durch die Geraden $g1_{min}$, $g1_{max}$, $g2_{min}$, .... begrenzt wird.

Auf die oben beschriebene Weise lassen sich im aktuellen Meßzyklus mit verhältnismäßig wenig Aufwand, diejenigen Objekte wiederfinden, die bereits im vorangegangenen Meßzyklus geortet worden waren. In dem in Fig. 3 gezeigten Beispiel gibt es drei solcher Objekte, die durch schwarz ausgefüllte Punkte (Koinzidenzen) T repräsentiert werden. Anhand der vom Tracking-Modul 24 gelieferten Vorhersagewerte wird für jedes dieser Objekte ein entsprechender Teilraum 40 definiert, und jeder dieser Teilräume wird nach Koinzidenzen durchsucht, um die aktuellen Orte und Geschwindigkeiten der entsprechenden Objekte zu ermitteln.

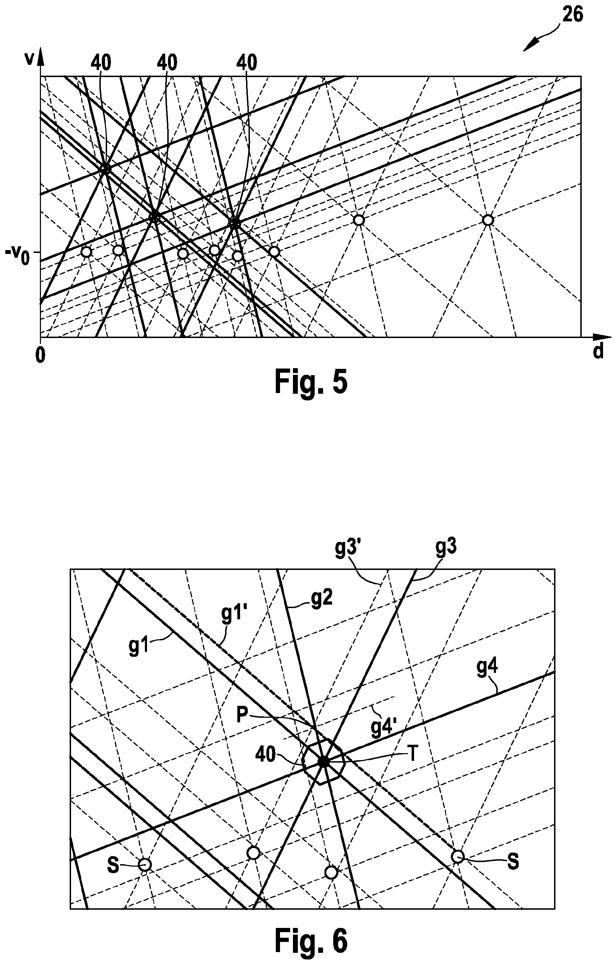

In Fig. 5 sind die Teilräume 40 für die drei Koinzidenzen T dargestellt, und die Geraden, die innerhalb dieser Teilräume eine Vierfach-Koinzidenz aufweisen, sind fett eingezeichnet.

In Fig. 6 ist das Umfeld eines dieser Teilräume 40 aus Fig. 5 vergrößert dargestellt. Die Geraden, die innerhalb dieses Teilraumes eine Koinzidenz aufweisen, sind wieder mit g1 - g4 bezeichnet. Fett und gestrichelt ist eine Gerade g1' eingezeichnet, die zu einem anderen Peak im Spektrum für die erste Modulationsrampe gehört und folglich parallel zu der Geraden g1 verläuft. Auch auch die Schnittpunkte der Geraden g1' mit den Geraden g2 - g4 kämen im Prinzip als "Kandidaten" für Koinzidenzen in Frage. In einem dieser Schnittpunkte, der mit P bezeichnet ist, scheint in der Tat (zufällig) eine Dreifach-Koinzidenz mit einer Geraden g3' zu bestehen, die zu einem anderen Objekt gehört. Dieser Punkt P liegt jedoch außerhalb des Teilraumes 40, so daß diese Koinzidenz und das zugehörige Objekt jedenfalls in dem hier betrachteten Verfahrensschritt nicht erkannt werden. Das wäre selbst dann der Fall, wenn ein (nicht gezeigtes) zwölftes Objekt noch eine Gerade g4' beisteuern würde, die annähernd durch denselben Punkt P geht (Vierfach-Koinzidenz).

Mit dem bisher beschriebenen Verfahren werden nur solche Objekte gefunden, die schon vorher im Tracking-Modul 24 verfolgt wurden. In diesem Beispiel entsprechen diese Objekte den drei Punkten, die in Fig. 3 mit T bezeichnet und schwarz ausgefüllt sind. Fig. 3 zeigt jedoch darüber hinaus noch sechs Punkte oder Koinzidenzen S (weiß), die stehende Objekte repräsentieren. Diese Punkte liegen innerhalb eines schmalen Schlauches um die Geschwindigkeit $v = -v_0$. Außerdem gibt es in Fig. 3 noch zwei schraffiert eingezeichnete Koinzidenzen N, die bisher nicht bekannten "neuen" Objekten entsprechen. Die im folgenden erläuterten Verfahrensschritte dienen zur Identifizierung der stehenden Objekte und der neuen Objekte.

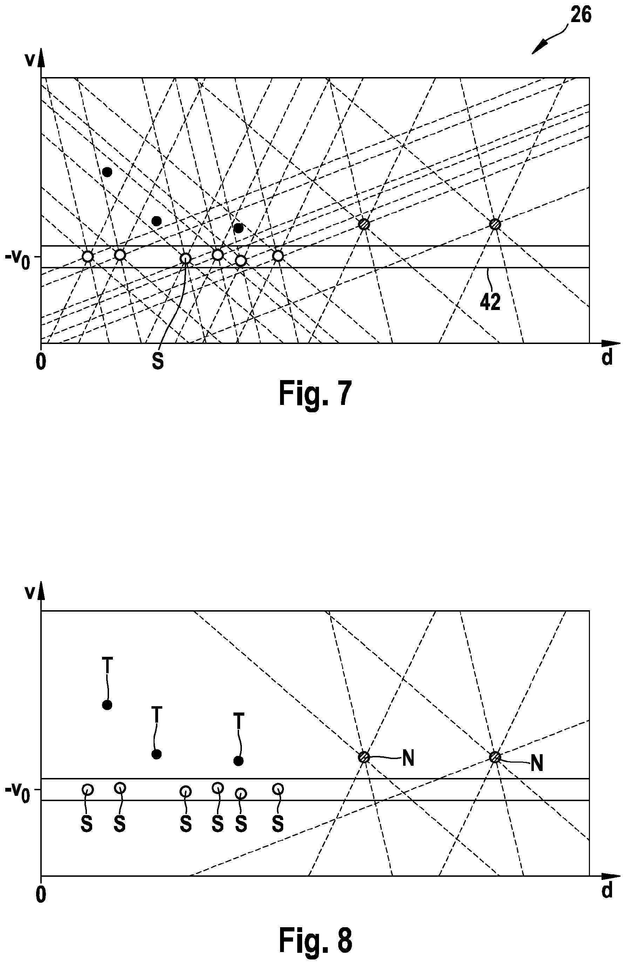

Nachdem alle aus dem Tracking bekannten Objekte (Koinzidenzen T) in den Teilräumen 40 identifiziert worden sind, werden die zu diesen Objekten gehörenden Geraden (in Fig. 5 fett eingezeichnet) für das weitere Verfahren ausgeblendet. Fig. 7 zeigt den d-v-Raum 26 ohne diese Geraden. Dadurch hat sich die Zahl der insgesamt vorhandenen Schnittpunkte beträchtlich reduziert.

Es werden nun zunächst die Koinzidenzen S gesucht, die stehende Objekte repräsentieren. Dazu wird der insgesamt betrachtete Ausschnitt des d-v-Raumes eingeschränkt auf einen Teilraum 42, der dem erwähnten Schlauch um die Geschwindigkeit $-v_0$ entspricht. Diese Einschränkung führt wieder dazu, daß für jede Modulationsrampe Maximal- und Minimalwerte der Frequenz k definiert werden, und die Suche kann auf die zwischen diesen Maximal- und Minimalwerten liegenden Frequenzbänder beschränkt werden, wodurch sich der Aufwand weiter verringert. Außerdem wird die Suche auf Vierfach-Koinzidenzen innerhalb des Teilraumes 42 beschränkt. Da alle sechs Punkte T in Fig. 7 solche Vierfach-Koinzidenzen sind, werden in diesem Schritt alle stehenden Objekte gefunden.

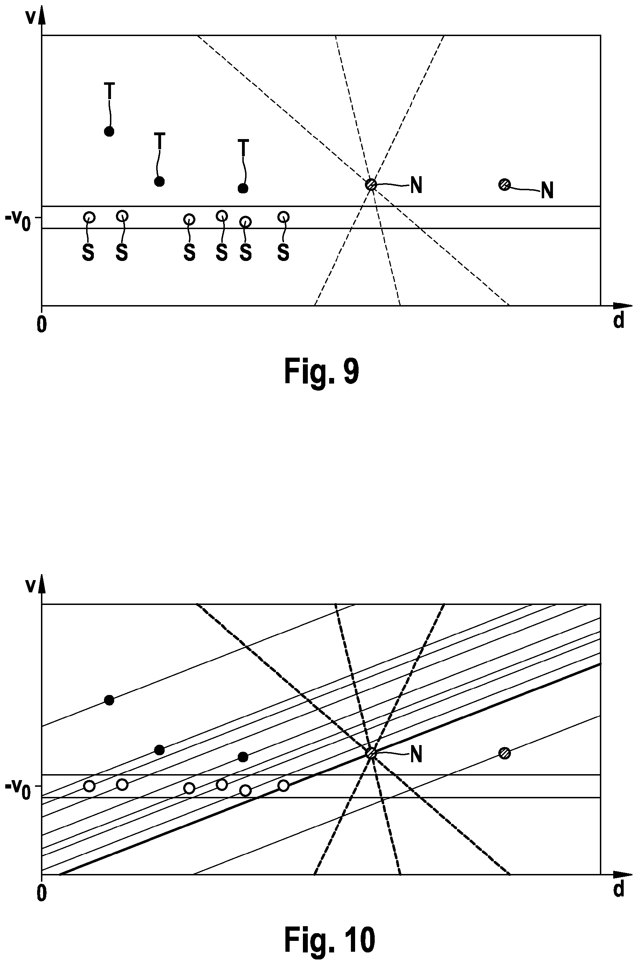

Im nächsten Schritt werden nun neue Objekte gesucht, die den Koinzidenzen N entsprechen. Dazu wird die Suche auf den kompletten d-v-Raum ausgedehnt (genauer gesagt auf einen Ausschnitt dieses Raumes, der alle realistischerweise in Frage kommenden d-v-Paare enthält), und es werden wieder alle Geraden ausgeblendet, die zu den Koinzidenzen S gehören. Fig. 8 zeigt den d-v-Raum ohne diese Geraden. Es bleiben nur noch sieben Geraden übrig, die eine Vierfach-Koinzidenz in einem der beiden Punkte N und eine Dreifach-Koinzidenz in dem anderen Punkt N bilden. Das zu der Vierfach-Koinzidenz gehörende neue Objekt wird unmittelbar erkannt, und die zugehörigen vier Geraden werden ausgeblendet, wie in Fig. 9 gezeigt ist.

Wenn für die Identifizierung eines Objekts eine Vierfach-Koinzidenz verlangt wird, so kann der zweite Punkt N nicht gefunden werden. Vergleicht man jedoch die Figuren 7 und 9, so zeigt sich, daß auch in diesem Punkt N ursprünglich eine Vierfach-Koinzidenz vorhanden war. Diese Koinzidenz ist jedoch dadurch zerstört worden, daß die Gerade ausgeblendet wurde, die durch diesen Punkt N und einen der Punkte S (den am weitesten rechts liegenden Punkt S in Fig. 7) hindurchging.

Hätte die Suche nach den Koinzidenzen S einerseits und den Koinzidenzen N andererseits in umgekehrter Reihenfolge stattgefunden, d. h., wäre zunächst nach den Punkten N gesucht worden und dann, nach ausblenden der zugehörigen Geraden, nach den Punkten T, so wären beide Punkte N als Objekte identifiziert worden, aber statt dessen wäre einer der Punkte T nicht als Objekt erkannt worden.

Insoweit haftet dem bisher beschriebenen Verfahren eine gewisse Abhängigkeit von der Reihenfolge der Suchschritte an, mit dem Ergebnis, daß bei unglücklicher Wahl der Reihenfolge Fehlmatches auftreten können oder aber reale Objekte übersehen werden.

Um diese Reihenfolgeabhängigkeit des Verfahrens zu mildern, schließt sich an die bisher beschriebenen Schritte noch ein weiterer Schritt an, der als "Restmatching" bezeichnet wird. Bei diesem Restmatching werden zumindest einige der zuvor ausgeblendeten Geraden wieder eingeblendet, wie in Fig. 10 gezeigt ist. Speziell sind dies hier die Geraden die zu der für die Vierfach-Koinzidenz fehlenden Geraden parallel sind. Dadurch wird in dem verbliebenen Punkt N die verloren gegangene Vierfach-Koinzidenz wiederhergestellt, so daß dieser Punkt nun mit einem realen Objekt identifiziert werden kann.

Dieser Vorgehensweise liegt die folgende Überlegung zugrunde. Ein Fehlmatch entsteht typischerweise dann, wenn vier Geraden, die zu vier verschiedenen Objekten gehören, sich zufällig (mit hinreichender Genauigkeit) in einem Punkt schneiden, so daß an diesem Punkt die Existenz eines in Wahrheit nicht vorhandenen weiteren Objekts vorgetäuscht wird. Da bei dem hier beschriebenen Verfahren jedoch die Geraden ausgeblendet werden, sobald der Punkt, zu dem sie gehören, mit einem Objekt identifiziert wurde, sollten normalerweise keine Geraden mehr übrig bleiben, nachdem alle vorhanden Objekte erkannt worden sind. Wenn jedoch, wie in dem hier gezeigten Beispiel, noch drei Geraden verbleiben, die sich in einem Punkt schneiden, so deutet dies darauf hin, daß dieser Schnittpunkt einem realen Objekt entsprechen könnte und daß die vierte Gerade nur deshalb weggefallen ist, weil sie zufällig auch durch einen anderen, früher erkannten Punkt hindurchgeht. Physikalisch würde dies bedeuten, daß sich die Peaks, die zu diesen beiden Punkten gehören, im Spektrum für die betreffende Modulationsrampe nahezu bei derselben Frequenz überlagern und sich deshalb nicht in zwei getrennte Peaks auflösen lassen, so daß sich im d-v-Raum zwei Punkte gewissermaßen eine Gerade "teilen" müssen.

In solchen Fällen ist davon auszugehen, daß der Peak, der eigentlich aus einer Überlagerung von zwei Peaks besteht, relativ ausgeprägt sein wird, d. h., daß sich bei dieser Frequenz eine verhältnismäßig hohe Leistung des empfangenen Radarsignals konzentriert. Um trotz solcher Peaküberlagerungen alle vorhandenen Objekte erkennen zu können, ist es deshalb zweckmäßig, wenn im Restmatching diejenigen Geraden wieder eingeblendet werden, die zu besonders leistungsstarken Peaks gehören. Auf diese Weise wird eine Balance erreicht, die einerseits dazu führt, daß in der Regel alle tatsächlich vorhandenen Objekte erkannt werden und andererseits unerwünschte Fehlmatches weitestgehend vermieden werden.

Bei dem bisher beschriebenen Verfahren wird vorausgesetzt, daß im ersten Schritt bereits Ergebnisse des Trackingmoduls 24 vorliegen, die auf die voraussichtlichen Orte von bekannten Objekten hinweisen. Wenn, etwa beim Einschalten des Radarsensors, noch keine solchen Tracking-Objekte vorhanden sind, kann dieser Schritt so nicht ausgeführt werden. In diesem Sonderfall würde das Verfahren mit der Suche nach den stehenden Objekten (Koinzidenzen S) beginnen, und alle bewegten Objekte würden zunächst als neue Objekte (Koinzidenzen N) identifiziert.

In einer anderen Ausführungsform ist es jedoch auch möglich, für die Initialisierungsphase einen speziellen Teilraum des d-v-Raumes vorzugeben, der sich über den für die jeweilige Assistenzfunktion (z. B. Abstandsregelung) besonders relevanten Abstands- und/oder Relativgeschwindigkeitsbereich erstreckt.

Hinsichtlich der Anzahl und Reihenfolge der Suchschritte und der dabei verwendeten Suchkriterien kann das Verfahren vielfältig variiert werden. Beispielsweise kann es zweckmäßig sein, für die Erkennung eines Objekts nicht nur eine Vierfach-Koinzidenz, sondern auch eine Dreifach-Koinzidenz genügen zu lassen.

Für den allgemeinen Fall, daß der Radarsensor mit N Modulationsrampen arbeitet, die sich in der Rampensteigung unterscheiden, wird derzeit die folgende Reihenfolge von Suchschritten als besonders zweckmäßig angesehen:

1. Suche nach Tracking-Objekten mit N-facher Koinzidenz
2. Suche nach Tracking-Objekten mit (N-1)-facher Koinzidenz
3. Suche nach stehenden Objekten mit N-facher Koinzidenz
4. Suche nach neuen Objekten mit N-facher Koinzidenz
5. Suche nach stehenden Objekten mit (N-1)-facher Koinzidenz
6. Suche nach neuen Objekten mit (N-1)-facher Koinzidenz
7. Restmatching

## Patentansprüche

1. Verfahren zum Frequenzmatching bei einem FMCW-Radarsensor, bei dem mehrere Frequenzen (k), die auf verschiedenen Modulationsrampen gewonnen werden und jeweils ein vom Radarsensor geortetes Objekt (16, 18) repräsentieren, in einem d-v-Raum (26) als geometrische Orte (g1 - g4) dargestellt werden, die mögliche Kombinationen aus Abstand d und Geschwindigkeit v des betreffenden Objekts repräsentieren, und, um die auf den verschiedenen Modulationsrampen georteten Objekte zu identifizieren, Koinzidenzen (T, S, N) zwischen den geometrischen Orten gesucht werden, die_zu auf verschiedenen Modulationsrampen gewonnenen Frequenzen (k) gehören, **dadurch gekennzeichnet, daß** in einem ersten Schritt die Suche nach Koinzidenzen (T) auf einen Teilraum (40, 42) des d-v-Raumes (26) beschränkt wird und in einem nachfolgenden Schritt die Suche auf andere Bereiche des d-v-Raumes ausgedehnt wird, jedoch mit Unterdrückung der Frequenzen (k), die zu den im ersten Schritt gefundenen Objekten gehören.

2. Verfahren nach Anspruch 1, **dadurch gekennzeichnet, daß** die Abstände und Geschwindigkeiten der erkannten Objekte von einem Tracking-Modul (24) verfolgt und in die Zukunft prädiziert werden, und daß der Teilraum (40) eine Umgebung mindestens eines Punktes (38) ist, der dem prädizierten Abstand und die prädizierten Geschwindigkeit eines verfolgten Objekts angibt.

3. Verfahren nach Anspruch 1 oder 2, **dadurch gekennzeichnet, daß** sich an den ersten Schritt mehrere aufeinanderfolgende Schritte anschließen, in denen mit unterschiedlichen Suchkriterien nach Koinzidenzen gesucht wird.

4. Verfahren nach Anspruch 3, **dadurch gekennzeichnet, daß** sich die Suchkriterien in der Wahl des Teilraumes (40, 42) unterscheiden.

5. Verfahren nach Anspruch 4, **dadurch gekennzeichnet, daß** ein Suchkriterium für einen auf den ersten Schritt folgenden Schritt darin besteht, daß nach Koinzidenzen (S) in einem Teilraum (42) gesucht wird, der durch ein begrenztes Abstandsintervall und/oder ein begrenztes Geschwindigkeitsintervall definiert ist.

6. Verfahren nach Anspruch 5, für einen in ein Fahrzeug eingebauten Radarsensor, **dadurch gekennzeichnet, daß** im d-v-Raum die Relativgeschwindigkeiten der Objekte (16, 18) repräsentiert werden und daß der Teilraum (42) durch ein begrenztes Geschwindigkeitsintervall in der Umgebung einer Relativgeschwindigkeit definiert wird, die entgegengesetzt gleich der Geschwindigkeit des Fahrzeugs ist.

7. Verfahren nach einem der Ansprüche 3 bis 6, für einen Radarsensor, der mit N verschiedenen Modulationsrampen arbeitet, **dadurch gekennzeichnet, daß** in mindestens einem Schritt des Verfahrens nach Koinzidenzen gesucht wird, an denen alle auf den N Modulationsrampen gewonnenen Frequenzen (k) beteiligt sind.

8. Verfahren nach einem der Ansprüche 3 bis 7, für einen Radarsensor, der mit N verschiedenen Modulationsrampen arbeitet, **dadurch gekennzeichnet, daß** in mindestens einem Schritt des Verfahrens nach Koinzidenzen von auf N-1 verschiedenen Modulationsrampen gewonnenen Frequenzen (k) gesucht wird.

9. Verfahren nach einem der Ansprüche 3 bis 8, **dadurch gekennzeichnet, daß** ein letzter Schritt des Verfahrens ein Restmatching-Schritt ist, in dem bei der Suche nach Koinzidenzen zumindest einige der in den vorherigen Schritten unberücksichtigt gebliebenen Frequenzen (k) wieder berücksichtigt werden.

10. Verfahren nach Anspruch 9, **dadurch gekennzeichnet, daß** diejenigen Frequenzen wieder berücksichtigt werden, für die die Leistungsdichte im Spektrum oberhalb eines bestimmten Schwellenwertes liegt.

11. FMCW-Radarsensor, in dem ein Verfahren nach einem der Ansprüchen 1 bis 10 implementiert ist.

12. Computerprogramm mit Programmcodemitteln, um ein Verfahren gemäß einem der Ansprüche 1 bis 10 durchzuführen, wenn das Programm auf einem Mikroprozessor eines Mikrocomputers, insbesondere Mikroprozessor des Frequenzmatching-Moduls (22), ausgeführt wird.

13. Computerprogrammprodukt mit Programmcodemitteln, die auf einem computerlesbaren Datenträger gespeichert sind, um ein Verfahren gemäß einem der Ansprüche 1 bis 10 durchzuführen, wenn das Programm auf einem Mikroprozessor eines Mikrocomputers, insbesondere Mikroprozessor des Frequenzmatching-Moduls (22), ausgeführt wird.


**Claims**

1. Method for frequency matching in an FMCW radar sensor, in which multiple frequencies (k) obtained on various modulation ramps and each representing an object (16, 18) localized by the radar sensor are depicted in a d-v space (26) as geometric locations (g1 - g4) representing possible combinations of distance d and speed v of the relevant object, and, in order to identify the objects localized on the various modulation ramps, coincidences (T, S, N) between the geometric locations are sought that belong to frequencies (k) obtained on various modulation ramps, **characterized in that** a first step involves the search for coincidences (T) being restricted to a partial space (40, 42) of the d-v space (26) and a subsequent step involves the search being expanded to other areas of the d-v space, but while suppressing frequencies (k) that belong to the objects found in the first step.

2. Method according to Claim 1, **characterized in that** the distances and speeds of the detected objects are tracked by a tracking module (24) and predicted into the future, and **in that** the partial space (40) is a vicinity of at least one point (38) that indicates the predicted distance and the predicted speed of a tracked object.

3. Method according to Claim 1 or 2, **characterized in that** the first step is followed by multiple successive steps in which different search criteria are used to search for coincidences.

4. Method according to Claim 3, **characterized in that** the search criteria differ in the choice of partial space (40, 42).

5. Method according to Claim 4, **characterized in that** a search criterion for a step following the first step is that coincidences (S) are sought in a partial space (42) that is defined by a bounded distance interval and/or a bounded speed interval.

6. Method according to Claim 5, for a radar sensor installed in a vehicle, **characterized in that** the relative speeds of the objects (16, 18) are represented in the d-v space and **in that** the partial space (42) is defined by a bounded speed interval in the vicinity of a relative speed that is opposite and equal to the speed of the vehicle.

7. Method according to one of Claims 3 to 6, for a radar sensor operating with N different modulation ramps, **characterized in that** at least one step of the method involves coincidences being sought that involve all the frequencies (k) obtained on the N modulation ramps.

8. Method according to one of Claims 3 to 7, for a radar sensor operating with N different modulation ramps, **characterized in that** at least one step of the method involves coincidences for frequencies (k) obtained on N-1 different modulation ramps being sought.

9. Method according to one of Claims 3 to 8, **characterized in that** a last step of the method is a residual matching step in which the search for coincidences results in at least some of the frequencies (k) that have been ignored in the previous steps being taken into consideration again.

10. Method according to Claim 9, **characterized in that** those frequencies for which the power density in the spectrum is above a particular threshold value are taken into consideration again.

11. FMCW radar sensor in which a method according to one of Claims 1 to 10 is implemented.

12. Computer program having program code means in order to perform a method according to one of Claims 1 to 10 when the program is executed in a microprocessor of a microcomputer, in particular a microprocessor of the frequency-matching module (22).

13. Computer program product having program code means stored on a computer-readable data storage medium in order to perform a method according to one of Claims 1 to 10 when the program is executed on a microprocessor of a microcomputer, in particular a microprocessor of the frequency-matching module (22) .

**Revendications**

1. Procédé d'accord de fréquences pour un détecteur radar à onde entretenue modulée en fréquence (OEMF), pour lequel plusieurs fréquences (k), qui sont obtenues sur différentes rampes de modulation, et représentent respectivement un objet (16, 18) localisé par un détecteur radar, sont représentées dans un espace d-v (26) en tant que lieux géométriques (g1 - g4), qui représentent les combinaisons possibles d'une distance d et d'une vitesse v de l'objet concerné, et, pour identifier les objets localisés sur les différentes rampes de modulation, des coïncidences (T, S, N) sont recherchées entre les lieux géométriques, qui appartiennent aux fréquences (k) obtenues sur différentes rampes de modulation, **caractérisé en ce que** dans une première étape, la recherche de coïncidences (T) est limitée à une partie d'espace (40, 42) de l'espace d-v (26) et dans une étape suivante la recherche est étendue à d'autres zones de l'espace d-v, toutefois avec suppression des fréquences (k), qui appartiennent aux objets trouvés au cours de la première étape.

2. Procédé selon la revendication 1, **caractérisé en ce que** les distances et les vitesses des objets identifiés sont suivies par un module de poursuite (24) et prédites dans l'avenir et **en ce que** la partie d'espace (40) est un environnement d'au moins un point (38), qui indique la distance prédite et la vitesse prédite d'un objet suivi.

3. Procédé selon la revendication 1 ou 2, **caractérisé en ce que** plusieurs étapes successives se raccordent à la première étape dans lesquelles des coïncidences sont recherchées avec des critères de recherche différents.

4. Procédé selon la revendication 3, **caractérisé en ce que** les critères de recherche se différencient dans le choix de la partie d'espace (40, 42).

5. Procédé selon la revendication 4, **caractérisé en ce qu'**un critère de recherche pour une étape suivant la première étape réside dans le fait que l'on recherche des coïncidences (S) dans une partie d'espace (42) qui est définie par un intervalle de distance limité et/ou un intervalle de vitesse limité.

6. Procédé selon la revendication 5, pour un détecteur radar intégré dans un véhicule, **caractérisé en ce que** les vitesses relatives des objets (16, 18) sont représentées dans l'espace d-v et **en ce que** la partie d'espace (42) est définie par un intervalle de vitesse limité dans l'environnement d'une vitesse relative qui est opposée et égale à la vitesse du véhicule.

7. Procédé selon l'une quelconque des revendications 3 à 6 pour un détecteur radar, qui fonctionne avec N rampes de modulation différentes, **caractérisé en ce que** l'on recherche des coïncidences dans au moins une étape du procédé, auxquelles participent toutes les fréquences (k) obtenues sur les N rampes de modulation.

8. Procédé selon l'une quelconque des revendications 3 à 7 pour un détecteur radar, qui fonctionne avec N rampes de modulation différentes, **caractérisé en ce que** l'on recherche des coïncidences de fréquences (k) obtenues sur N-1 rampes de modulation différentes dans au moins une étape du procédé.

9. Procédé selon l'une quelconque des revendication 3 à 8, **caractérisé en ce qu'**une dernière étape du procédé est une étape d'accord résiduel dans laquelle sont à nouveau prises en considération, lors de la recherche des coïncidences, au moins plusieurs des fréquences (k) restées inconsidérées dans l'étape précédente.

10. Procédé selon la revendication 9, **caractérisé en ce que** sont à nouveau prises en considération les fréquences pour lesquelles la densité de puissance se situe dans le spectre au-dessus d'une certaine valeur de seuil.

11. Détecteur radar à onde entretenue modulée en fréquence (OEMF), dans lequel est mis en oeuvre un procédé selon l'une quelconque des revendications 1 à 10.

12. Programme informatique avec des moyens de codage de programme pour exécuter un procédé selon l'une quelconque des revendications 1 à 10, lorsque le programme est exécuté sur un microprocesseur d'un micro-ordinateur, notamment un micro-ordinateur du module d'accord de fréquences (22).

13. Produit de programme informatique avec des moyens de codage de programme, qui sont mémorisés sur un support de données lisible par ordinateur pour exécuter un procédé selon l'une quelconque des revendications 1 à 10, lorsque le programme est exécuté sur un microprocesseur d'un micro-ordinateur, notamment un micro-processeur du module d'accord de fréquences (22).

**Fig. 1**

**Fig. 2**

Fig. 3

Fig. 4

**Fig. 5**

**Fig. 6**

**Fig. 7**

**Fig. 8**

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006028465 A1
- DE 10243811 A1

- DE 102007043535 A1